# EUROPÄISCHE PATENTSCHRIFT

(11) **EP 0 609 480 B1**
(45) Veröffentlichungstag und Bekanntmachung des Hinweises auf die Patenterteilung: **25.09.1996**
(21) Anmeldenummer: 93104499.4
(22) Anmeldetag: 18.03.1993
(51) Int. Cl.: B60N 2/22

(54) **Fahrzeugsitz**
Vehicle seat
Siège de véhicule

(30) Priorität: 31.01.1993 DE 4210591
(43) Veröffentlichungstag der Anmeldung: 10.08.1994
(73) Patentinhaber: Bayerische Motoren Werke Aktiengesellschaft, 80788 München (DE)
(72) Erfinder: Strojny, Pawel, W-8132 Tutzing (DE)

(56) Entgegenhaltungen:
- EP-A- 0 523 349
- DE-A- 2 247 921
- DE-A- 2 248 996
- US-A- 4 781 415
- US-A- 4 946 223

## Beschreibung

Die Erfindung betrifft einen Fahrzeugsitz gemäß dem Oberbegriff des Anspruchs 1. Siehe z.B. EP-A-0 523 349.

Aus der DE-OS 38 37 665 ist bereits ein Fahrzeugsitz bekannt, der eine Vorrichtung zur Spielunterdrückung in den Arretierungseinrichtungen zur Verstellung einer Rückenlehne in bezug auf ein Sitzunterteil aufweist. Die Vorrichtung zur Spielunterdrückung ist so aufgebaut, daß eine zusätzliche Belastung der Rückenlehne zur Spielunterdrückung nur in dem Verstellbereich auftritt, der tatsächlich während der Fahrt genutzt wird. In diesem Verstellbereich werden die Klappergeräusche verhindert, die aufgrund des Spiels und der während der Fahrt auftretenden dynamischen Massenkräfte ohne Spielunterdrückung ansonsten entstehen würden. Die Vorrichtung zur Spielunterdrückung besteht aus einer Biegefeder und einer damit verbundenen, einstellbaren Schraubenfeder. Das eine Ende der Biegefeder ist an der Drehachse für die Rückenlehne befestigt, während das andere Ende der Biegefeder kraftschlüssig mit der Schraubenfeder verbunden ist. Durch die Verbindung des einen Endes der Biegefeder mit der Drehachse wird ein Drehmoment auf die Rückenlehne erzeugt, das die Rückenlehne nach vorne drückt. Dadurch wird die Rückenlehne sich um das unterdrückte Spiel nach vorne bewegen, sobald die Rückenlehne vom Gewicht der auf dem Sitz befindlichen Person entlastet wird.

Aus der EP-A-0 523 349 und der US-A-4 781 415 sind ebenfalls Fahrzeugsitze bekannt, bei denen ein Federelement mit seinem einen Ende an einer Zahnradwelle angreift, wobei das andere Ende im Rahmen des Sitzunterteils befestigt ist. Dieses Federelement bewirkt ein Drehmoment auf die Rückenlehne in der Weise, daß die Rückenlehne nach vorne gedrückt wird. Für eine Verstellung der Rückenlehne nach hinten muß die Zahnradwelle entriegelt und die Federkraft überwunden werden, indem ein Drehmoment auf die Rückenlehne nach hinten ausgeübt wird. Bei einer Verstellung nach vorne schwenkt im entriegelten Zustand der Zahnradwelle die Rückenlehne aufgrund des durch das Federelement ausgeübten Drehmoments von alleine nach vorne. Die Endstellung der Rückenlehne wird durch ein Anhalten der Rückenlehne erreicht. Bei diesen bekannten Fahrzeugsitzen ist nachteilig, daß das im Verstellgetriebe befindliche Spiel durch eine Verschwenkung der Rückenlehne nach hinten ausgeglichen wird, so daß aber die Rückenlehne nach vorne schwenkt, sobald die Rückenlehne vom Gewicht der an der Rückenlehne anliegenden Person entlastet wird.

Aufgabe der Erfindung ist es, einen Fahrzeugsitz zu schaffen, bei dem eine Spielunterdrückung in einfacher Weise ohne die Nachteile des Standes der Technik erreichbar ist und die Rückenlehne sowohl im belasteten als auch im unbelasteten Zustand in ihrer eingestellten Position verbleibt.

Diese Aufgabe wird durch die Merkmale des Anspruchs 1 gelöst.

Durch die Anordnung eines Federelementes zwischen einer Zahnradwelle und einer Drehachse einer Rückenlehne wird eine Rückstellkraft bzw. ein Rückstellmoment auf die Rückenlehne nach hinten bewirkt. Gleichzeitig liegt eine Drehmomentdifferenz in dem Verstellgetriebe vor, so daß bei einer Entriegelung des Verstellgetriebes die Rückenlehne nach vorne schwenkt.

Das Federelement ist in einer bevorzugten Ausführungsform eine gewundene Biegefeder, insbesondere eine Schraubenfeder oder eine Spiralfeder. Das Federelement kann aus einer einzigen Feder oder aus mehreren, vorzugsweise zwei Federn bestehen. Die Lagerung des Federelementes kann an einem verlängerten Ende einer Zahnradwelle des Verstellgetriebes erfolgen. In dieser Ausführungsform sind bevorzugt Spiralfedern einsetzbar. In einer anderen Ausführungsform ist das Ende der Zahnradwelle bis zur gegenüberliegenden Seite eines Sitzrahmens verlängert, wobei das Ende der Zahnradwelle in dem Sitzrahmen gelagert ist. Bei dieser Lagerungsform sind eine oder mehrere Schraubenfedern einsetzbar, die in der Regel parallel geschaltet sind.

Die Verbindung zwischen dem Federelement und der Drehachse kann direkt oder unter Verwendung eines Verlängerungsbauteiles erfolgen. Das Verlängerungsbauteil kann insbesondere ein Stahlseil sein.

Das Verstellgetriebe kann aus einem auf der Zahnradwelle angeordneten Zahnrad bestehen, das in Eingriff mit einem Zahnsegmentabschnitt steht, der an einem an der Rückenlehne befestigten Gelenkbeschlag ausgebildet ist. In einer anderen Ausführungsform erfolgt die Verstellung durch zwei auf der Zahnradwelle angeordnete Zahnräder, wobei das kleine Zahnrad in Eingriff mit dem Gelenkbeschlag für die Rückenlehne steht und das größere Zahnrad durch einen Sperrmechanismus verriegelbar ist. Durch das kleinere Zahnrad erfolgt die Drehmomentübertragung bei der Verstellung der Rückenlehnen-Neigung. Aus Festigkeitsgründen weist das kleinere Zahnrad relativ dicke Zähne auf, wobei die Zähnezahl in der Regel kleiner als 10 ist und insbesondere 6 beträgt. Über das größere Zahnrad erfolgt die Feineinstellung der Rückenlehnen-Neigung und die Verriegelung der eingestellten Rückenlehne. Entsprechend größer ist die Zahl der Zähne, die zwischen 70 und 150 liegen kann. In diese Zähne greift ein Zahnsegmentabschnitt eines Sperrgliedes ein, der durch einen federbelasteten Nocken in seine Verriegelungsstellung gedrückt wird.

Die Entriegelung des Sperrgliedes erfolgt dadurch, daß der Nocken entgegen der Federkraft weggezogen wird, so daß sich das Sperrglied aus der Verriegelungsposition lösen kann. Die Verstellung des Sperrgliedes kann durch Aufbringung einer Federkraft oder durch das Eigengewicht des Sperrgliedes erfolgen.

Durch den erfindungsgemäßen Fahrzeugsitz erfolgt ein vollständiger Spielausgleich der Rückenlehne nach hinten auch bei langzeitiger Nutzung, ohne daß ein übermäßiger Verschleiß der Einzelteile auftritt. Eine Kosten- und Gewichtsreduzierung ergibt sich durch die Anwendung nur einer Feder für die doppelte Verspannung der Rückenlehne. Der Einbau der Feder im Lehnenneigungs-Verstellsegment ermöglicht eine einfache und platzsparende Konstruktion.

Eine Ausführungsform der Erfindung wird nachstehend anhand der Zeichnungen beispielshalber beschrieben. Dabei zeigen:
- Figur 1: eine prinzipielle Darstellung einer ersten Ausführungsform eines Fahrzeugsitzes in einer Ansicht schräg von vorne, bei der die Spielunterdrückung und die Rückstellkraft der Lehne über eine einseitig gelagerte Spiralfeder erfolgt,
- Figur 2: eine Schnittansicht durch eine Drehachse und eine Zahnradwelle der in der Figur 1 gezeigten Ausführungform,
- Figur 3: eine Ansicht von der Seite der in der Figur 1 gezeigten Ausführungsform,
- Figur 4: eine Seitenansicht, die den Verstellmechanismus sowie dessen Verriegelung zeigt und
- Figur 5: eine zweite Ausführungsform eines Fahrzeugsitzes in einer Ansicht schräg von vorne, bei der die Spielunterdrückung und die Rückstellkraft über zwei Schraubenfedern erfolgt,

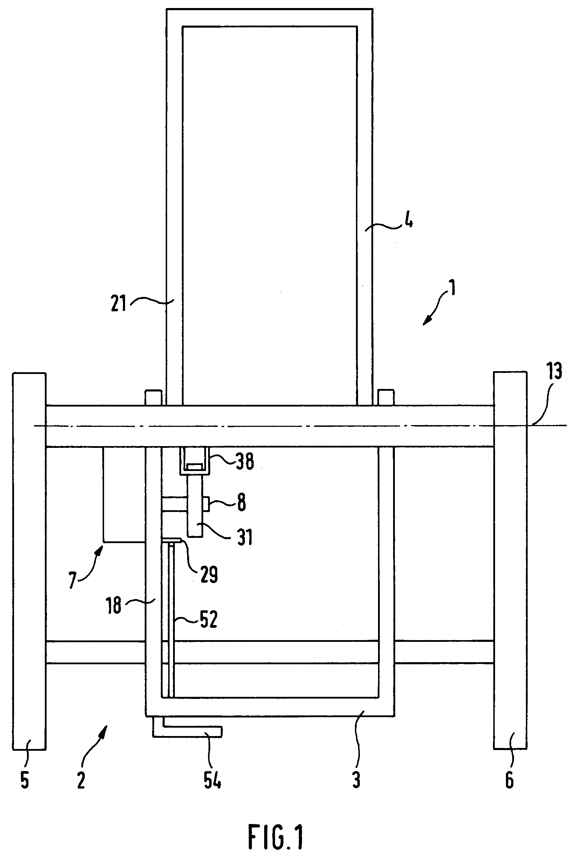

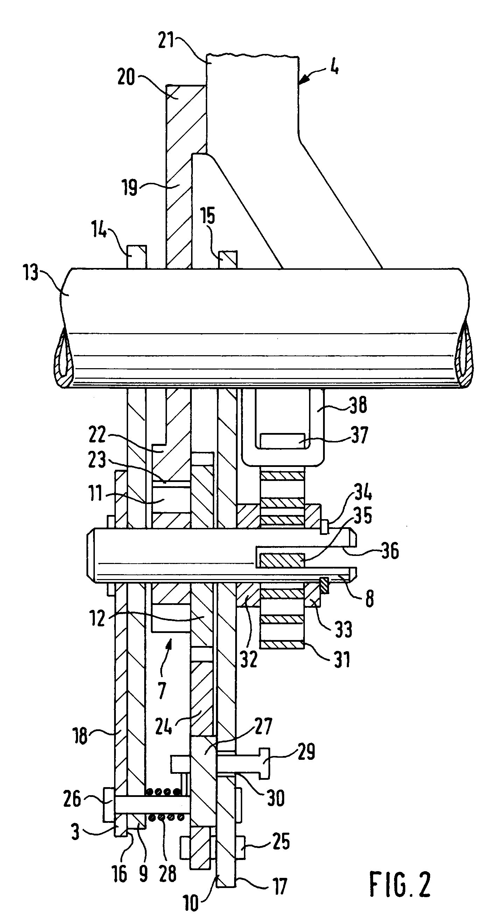

Die Figuren 1 und 2 zeigen einen Rahmenaufbau 2, eines Fahrzeugsitzes 1, der aus einem Sitzunterteil 3 und einer dazu verschwenkbaren Rückenlehne 4 besteht. Das Sitzunterteil 3 ist über Führungsschienen 5 und 6 an einer Karosserie eines Fahrzeuges befestigbar. Die Verstellung der Neigung der Rückenlehne 4 in bezug zu dem Sitzunterteil 3 erfolgt über eine Verstellvorrichtung 7. Diese Verstellvorrichtung 7 weist eine Zahnradwelle 8 auf, die in der vorliegenden Ausführungsform in zwei Gelenkbeschlägen 9 und 10 des Sitzunterteils 3 gelagert ist. Auf der Zahnradwelle 8 sind axial- und drehfest zwei Zahnräder 11 und 12 befestigt. Die beiden Gelenkbeschläge 9 und 10 sind mit ihrem jeweiligen einen Ende 14, 15 an einer als Rohr ausgebildeten Drehachse 13 für die Rückenlehne 4 drehbar gelagert. An den jeweiligen gegenüberliegenden Enden 16, 17 sind die Gelenkbeschläge 9, 10 über eine Schraub- oder Nietverbindung 26 an einem Rahmenteil 18 des Sitzunterteils 3 befestigt. Zwischen den Gelenkbeschlägen 9 und 10 ist drehbar ein Gelenkbeschlag 19 angeordnet, dessen eines Ende 20 an einem Rahmenteil 21 der Rückenlehne 4 befestigt ist und dessen anderes Ende 22 einen Zahnsegmentabschnitt 23 aufweist, der in Eingriff mit dem Zahnrad 11 steht. Das benachbart dazu angeordnete Zahnrad 12 ist durch ein Sperrglied 24 blockiert, das um einen in dem Gelenkbeschlag 10 befestigten Bolzen 25 schwenkbar ist. Auf das Sperrglied 24 drückt ein Nocken 27, der durch eine Feder 28 auf das Sperrglied 24 gedrückt wird. Sowohl der Nocken 27 als auch die Feder 28 sind auf der Schraub- oder Nietverbindung 26 angeordnet. An dem Nocken 27 ist ein Stift 29 befestigt, der in einer in dem Gelenkbeschlag 10 ausgebildeten Nut 30 geführt ist. Über den Stift 29 erfolgt die Entriegelung, in dem der Nocken 27 von dem Sperrglied 24 beispielsweise über eine Stange 52 und einen Griff 54 weggezogen wird und das Sperrglied 24 infolge seines Eigengewichts oder aufgrund einer Federspannung sich aus der Verbindung mit dem Zahnrad 12 löst.

Auf der zum Zahnrad 12 gegenüberliegenden Seite des Gelenkbeschlages 10 ist auf einer Verlängerung der Zahnradwelle 8 ein als Spiralfeder ausgebildetes Federelement 31 angeordnet. Zur Sicherung der axialen Lage des Federelementes 31 sind Distanzhülsen 32 und 33 beidseitig des Federelementes 31 vorgesehen und beispielsweise durch einen Sicherungsring 34 befestigt. Ein Ende 35 des Federelementes 31 befindet sich in einem, in der Zahnradwelle 8 ausgebildeten Schlitz 36. Das andere Ende 37 des Federelementes 31 ist in einer Schlaufe eines Stahlseiles 38 eingehakt. In einer anderen Ausführungsform ist das Ende 37 direkt an der Drehachse 13 der Rückenlehne 4 befestigt.

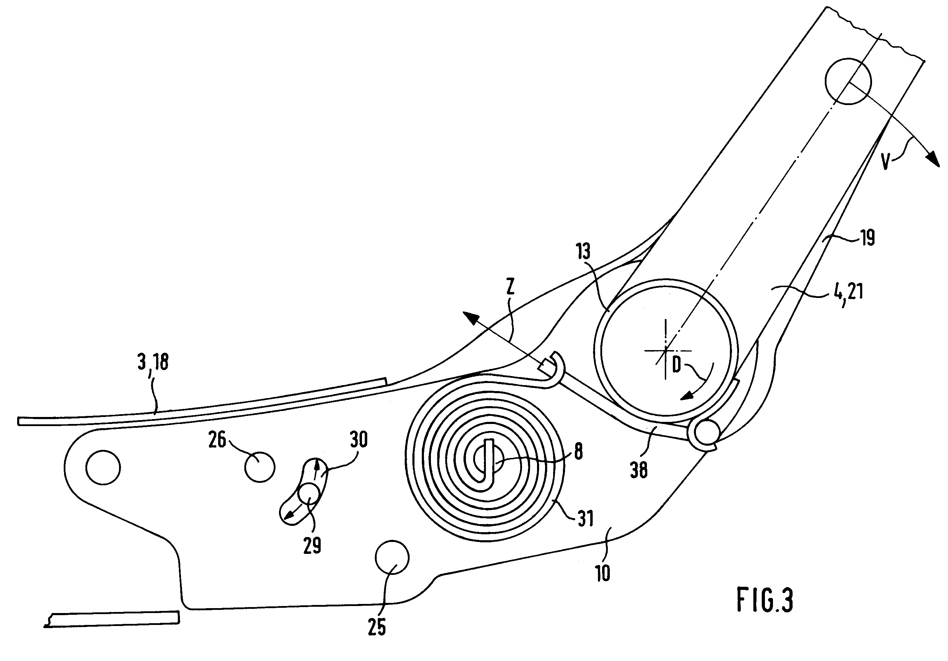

In der Seitenansicht der Figur 3 ist gezeigt, wie in der verriegelten Stellung des Verstellgetriebes 7 durch das Federelement 31 eine Zugkraft über das Seil 38 auf die als Rohr ausgebildete Drehachse 13 ausgeübt wird. Die Zugkraft ist durch einen schräg nach vorne zeigenden Pfeil Z und das auf die Drehachse 13 wirkende Moment durch einen Pfeil D gekennzeichnet. Durch das Drehmoment wird die Rückenlehne 4 dazu veranlaßt, daß sie unter einer Vorspannung nach hinten steht, wie dies durch eine Pfeil V gekennzeichnet ist. Ferner ist aus der Figur 3 die Lage der Achse 25 für das Sperrglied 24 erkennbar, die bewirkt, daß das Sperrglied 24 nach Freigabe durch ein Zurückziehen des Nockens 27 über den Stift 29 aufgrund seines vor der Drehachse liegenden Schwerpunktes nach vorne, weg von der Rückenlehne 4, fällt.

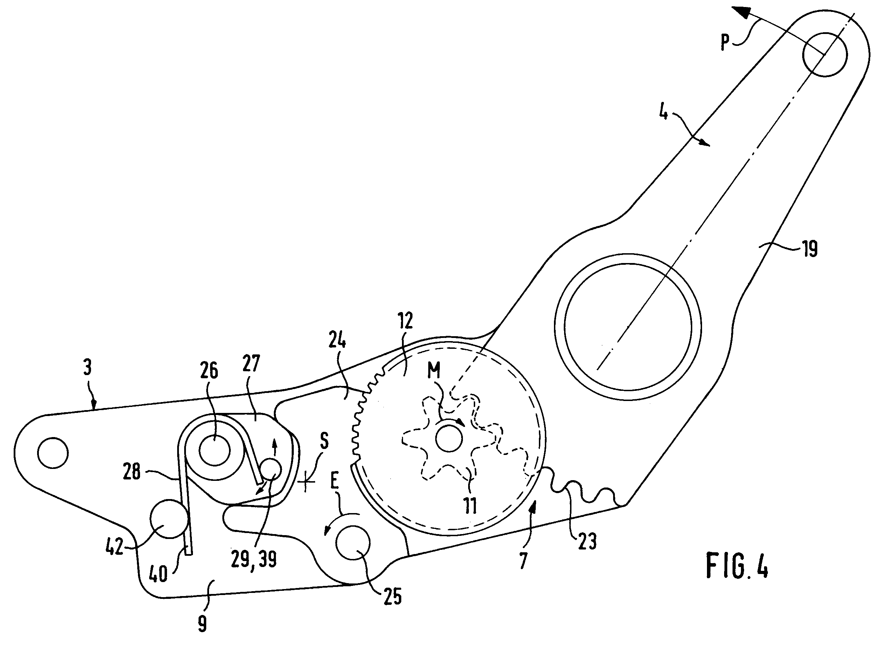

In der Seitenansicht der Figur 4 ist der Verstellmechanismus 7 sowie dessen Verriegelung gezeigt. Der Gelenkbeschlag 19 steht über das Zahnsegment 23 in Eingriff mit dem Zahnrad 11. Über das Zahnrad 11 sowie über den Zahnradsegmentabschnitt 23 erfolgt die Drehmomentübertragung auf die Rückenlehne 4. Das Zahnrad 11 und der Zahnsegmentabschnitt 23 weisen relativ wenig Zähne auf, wobei die Zähnezahl in der Regel kleiner als 10 ist und vorzugsweise 6 beträgt. Die Feinabstimmung der Neigung der Rückenlehne 4 und die Verriegelung der Rückenlehne 4 erfolgt über das Zahnrad 12 und über das Sperrglied 24, wobei das Zahnrad 12 eine relativ hohe Zähnezahl aufweist, die zwischen 70 und 150 Zähne liegen kann. Beim Sperrglied 24 ist näherungsweise der Schwerpunkt S eingezeichnet, so daß das Sperrglied 24 aufgrund seines Eigengewichts bei einer Entriegelung in Richtung des Nockens 27 dreht, wie dies durch einen Pfeil E gekennzeichnet ist. Der Nocken 27 wird durch die Schraubenfeder 28 in Richtung des Sperrgliedes 24 über ein Ende 39 des Stiftes 29 gedrückt. Das andere Ende 40 der Feder 28 stützt sich an einem an dem Gelenkbeschlag 9 angeordneten Bolzen 42 ab.

Erfolgt eine Entriegelung, dann wird sich das Zahnrad 11 aufgrund des durch das Federelement 31 bewirkte Drehmoment M in die mit einem Pfeil M gekennzeichnete Richtung drehen, so daß sich die Rückenlehne 4 in Richtung eines Pfeiles P nach vorne bewegt.

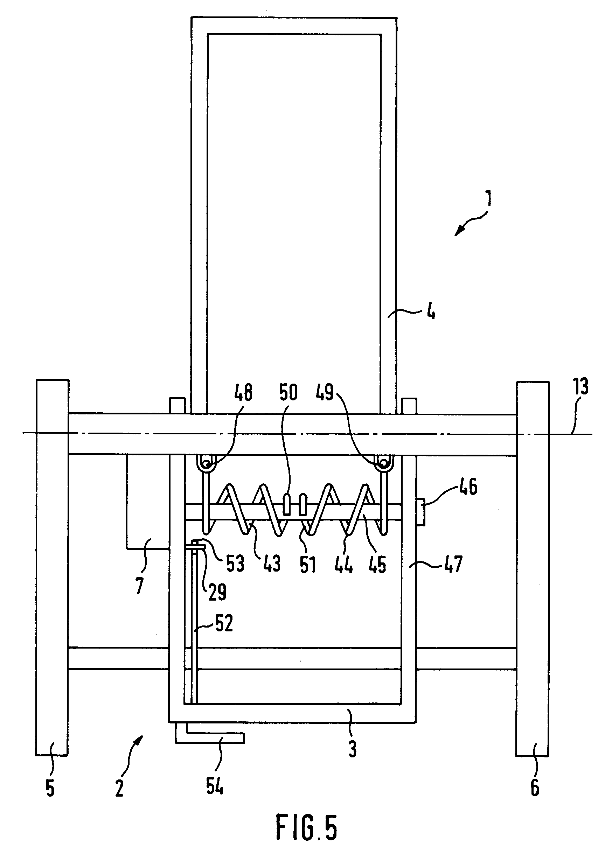

Die Figur 5 zeigt eine weitere Ausführungsform eines Fahrzeugsitzes 1, bei dem statt einer Spiralfeder 31 zwei Schraubenfedern 43 und 44 auf einer Zahnradwelle 45 angeordnet sind, wobei das Ende 46 der Zahnradwelle 45 in einem Rahmenteil 47 des Sitzunterteils 3 gelagert ist. Die beiden, mit der Drehachse 13 der Rückenlehne 4 verbundenen Enden 48 und 49 üben ein Drehmoment auf die Rückenlehne 4 im verriegelten Zustand der Verstellvorrichtung 7 aus. Über die jeweiligen, dazu gegenüberliegenden Enden 50 und 51 der Federn 43, 44 erfolgt die Übertragung eines Drehmomentes im entriegelten Zustand der Verstellvorrichtung 7, die zu einem Verschwenken der Rückenlehne nach vorne führt. Die Entriegelung erfolgt beispielsweise über eine Stange 52, deren eines Ende 53 an dem Stift 29 befestigt ist und deren anderes Ende an einem Griff 54 angeordnet ist.

## Patentansprüche

1. Fahrzeugsitz mit einem Sitzunterteil (3) und mit einer relativ dazu über eine Verstellvorrichtung (7) verschwenkbaren Rückenlehne (4), wobei die Verstellvorrichtung eine Zahnradwelle (8; 45) mit einem darauf angeordneten Zahnrad (11) aufweist, wobei die Zahnradwelle im Sitzunterteil (3) gelagert ist, wobei das Zahnrad (11) über mindestens ein weiteres Zahnrad (23) ein Drehmoment auf die Rückenlehne ausüben kann, wobei auf der Zahnradwelle (8; 45) ein Ende eines Federelementes (31; 43, 44) befestigt ist,
dadurch gekennzeichnet, daß das andere Ende (37; 48, 49) des Federelementes (31; 43, 44) mit einer Drehachse (13) der Rückenlehne (4) in der Weise verbunden ist, daß im verriegelten Zustand der Zahnradwelle (8; 45) das durch das Federelement (31; 43, 44) erzeugte Drehmoment die Rückenlehne (4) nach hinten drückt, daß das Federelement (31; 43, 44) im verriegelten Zustand eine Drehmomentdifferenz aufweist, die bei einer Entriegelung der Zahnradwelle (8; 45) eine Drehung des Zahnrades (11) in der Weise bewirkt, daß das Verstellgetriebe (7, 23) die Rückenlehne (4) mit einem Drehmoment beaufschlagt, das die Rückenlehne (4) nach vorne schwenkt.

2. Fahrzeugsitz nach Anspruch 1,
dadurch gekennzeichnet, daß das Federelement (31; 43, 44) eine gewundene Biegefeder, insbesondere eine Spiralfeder oder Schraubenfeder, ist.

3. Fahrzeugsitz nach Anspruch 1 oder 2,
dadurch gekennzeichnet, daß die Verbindung zwischen dem Federelement (31; 43,44) und der Drehachse (13) der Rückenlehne (4) direkt erfolgt.

4. Fahrzeugsitz nach Anspruch 1 oder 2,
dadurch gekennzeichnet, daß die Verbindung zwischen dem Federelement (31; 43, 44) und der Drehachse (13) durch ein Zwischenteil (38) erfolgt.

5. Fahrzeugsitz nach einem oder mehreren der vorhergehenden Ansprüche,
dadurch gekennzeichnet, daß auf der Zahnradwelle (8, 45) ein Zahnrad (11) zur Drehmomentübertragung und ein Zahnrad (12) zur Feineinstellung der Neigung der Rückenlehne (4) befestigt ist, daß das Zahnrad (11) in Eingriff mit einem Zahnsegmentabschnitt (23) eines mit der Rückenlehne (4) verbundenen Gelenkbeschlages (19) steht und daß das Zahnrad (12) durch ein Sperrglied (24) verriegelbar ist.

6. Fahrzeugsitz nach Anspruch 5,
dadurch gekennzeichnet, daß das Zahnrad (11) eine Zähnezahl zwischen 4 und 10 und das Zahnrad (12) eine Zähnezahl zwischen 70 und 150 aufweist.

## Claims

1. A vehicle seat comprising a bottom part (3) and a back rest (4) pivotable relative thereto via an adjusting device (7), the adjusting device comprising a shaft (8, 45) on which a toothed wheel (11) is mounted, the shaft being disposed in the bottom part (3) and the toothed wheel (11) being adapted to exert a torque on the back rest via at least one additional toothed wheel (23), one end of a spring element (37; 43, 44) being secured to the toothed-wheel shaft (8, 45),
characterised in that the other end (37; 48, 49) of the spring element (31; 43, 44) is connected to a pivot (13) of the back rest (4) in such a way that when the shaft (8; 45) is in the locked state, the torque generated by the spring element (31; 43, 44) presses the back rest (4) backwards, and in the locked state the spring element (31; 43, 44) has a differential torque which, when the shaft (8; 45) is unlocked, rotates the toothed wheel (11) in such a way that the adjusting gear (7, 23) applies a torque to the back rest (4) which pivots it forwards.

2. A vehicle seat according to claim 1,
characterised in that the spring element (31; 43, 44) is a helical torsion spring, especially a spiral spring or helical spring.

3. A vehicle seat according to claim 1 or claim 2,
characterised in that the connection between the spring element (31; 43, 44) and the pivot (13) of the back rest (4) is direct.

4. A vehicle seat according to claim 1 or claim 2,
characterised in that the connection between the spring element (31; 43, 44) and the pivot (13) is via an intermediate part (38).

5. A vehicle seat according to one or more of the preceding claims,
characterised in that a toothed wheel (11) for transmitting torque and a toothed wheel (12) for fine adjustment of the tilt of the back rest (4) are secured to the shaft (8, 45), the toothed wheel (11) is in engagement with a toothed segment portion (23) of a mounting fitting (19) connected to the back rest (4), and the toothed wheel (12) is lockable by a locking element (24).

6. A vehicle seat according to claim 5,
characterised in that the toothed wheel (11) has between four and ten teeth and the toothed wheel (12) has between 70 and 150 teeth.

## Revendications

1. Siège de véhicule avec une partie inférieure de siège (3) et avec un dossier (4) susceptible de pivoter par rapport à elle par l'intermédiaire d'un dispositif de réglage (7), ce dispositif de réglage comportant un arbre de roue dentée (8, 45) avec une roue dentée (11) disposée sur celui-ci, l'arbre de roue dentée étant monté sur la partie inférieure de siège (3), la roue dentée (11) pouvant exercer un couple de rotation sur le dossier par l'intermédiaire d'au moins une autre roue dentée (23), tandis que sur l'arbre de roue dentée (8, 45) est fixée une extrémité d'un élément élastique (31 ; 43, 44), siège de véhicule
caractérisé en ce que
l'autre extrémité (37 ; 48, 49) de l'élément élastique (31 ; 43, 44) est relié à un axe de rotation (13) du dossier (4) de façon qu'à l'état verrouillé de l'arbre de roue dentée (8 ; 45) le couple de rotation produit par l'élément élastique (31 ; 43 ,44) pousse le dossier (4) vers l'arrière, en ce que l'élément élastique (31 ; 43 ,44) à l'état verrouillé présente une différence de couple de rotation, qui lors d'un déverrouillage de l'arbre de roue dentée (8 ; 45) provoque une rotation de la roue dentée (11) de façon que le mécanisme de réglage (7, 23) sollicite le dossier (4) par un couple de rotation qui fait pivoter le dossier (4) vers l'avant.

2. Siège de véhicule selon la revendication 1,
caractérisé en ce que
l'élément élastique (31 ; 43, 44) est un ressort de flexion enroulé, notamment un ressort de flexion ou un ressort hélicoïdal.

3. Siège de véhicule selon la revendication 1 ou 2,
caractérisé en ce que
la liaison entre l'élément élastique (31 ; 43, 44) et l'axe de rotation (13) du dossier (4) s'effectue directement.

4. Siège de véhicule selon la revendication 1 ou 2,
caractérisé en ce que
la liaison entre l'élément élastique (31 ; 43, 44) et l'axe de rotation (13) du dossier (4) s'effectue grâce à une pièce intermédiaire (38).

5. Siège de véhicule selon une ou plusieurs des revendications précédentes,
caractérisé en ce que
sur l'arbre de roue dentée (8, 45) est fixée une roue dentée (11) pour la transmission du couple de rotation et une roue dentée (12) pour le réglage fin de l'inclinaison du dossier (4), en ce que la roue dentée (11) est en prise avec un segment denté (23) d'une armature d'articulation (19) reliée au dossier (4), et en ce que la roue dentée (12) est verrouillage par un organe d'arrêt (24).

6. Siège de véhicule selon la revendication 5,
caractérisé en ce que
la roue dentée (11) comporte un nombre de dents entre 4 et 10, et la roue dentée (12) un nombre de dents entre 70 et 150.
